# EUROPEAN PATENT APPLICATION

(11) **EP 2 696 300 A2**
(43) Date of publication of application: **12.02.2014**
(21) Application number: 13179728.4
(22) Date of filing: 08.08.2013
(51) Int. Cl.: G06F 17/30

(54) **Network based font subset management**

(30) Priority: 10.08.2012 US 201213572082
(71) Applicant: Monotype Imaging, Inc., Woburn, Massachusetts 01801 (US)
(72) Inventor: Levantovsky, Vladimir, North Andover, MA 01845-3110 (US); Roberts, Christopher J., Andover, MA 01810 (US); Yetrintala, Venkat, Wood Dale, IL 60191 (US)
(74) Representative: Peterreins, Frank

(57) **Abstract**

A system includes a first computing device that includes a memory configured to store instructions. The first computing device also includes a processor to execute the instructions to perform a method that includes receiving one or more environment characteristics of a communication connection between a user device and a font provider. The method also includes determining an appropriate amount of font information of a web asset to provide to the user device based upon the one or more environment characteristics, and, providing the appropriate amount of font information of the web asset to the user device for presenting the web asset.

## Description

### BACKGROUND

This description relates to initiating the production and network delivery of font subsets.

In the ever-expanding connectivity provided by computer networks such as the Internet, various types of content such as text, graphics, audio, video, etc. may be exchanged between a few computing devices or broadcast to a multitude. Due to such connectivity, users located throughout various regions of the globe may access content providers who need the flexibility of providing content to users of different nationalities and cultures. For example, content provided to North American users may not be discernable to Asian users. As such, providers may tailor content for users in particular geographical regions or provide adjustable content to different users.

### SUMMARY

The systems and techniques described here relate to determining appropriate instances to subset fonts for delivery, for example, to one or more client computing devices.

In one aspect, a computer-implemented method includes receiving one or more environment characteristics of a communication connection between a user device and a font provider. The method also includes determining an appropriate amount of font information of a web asset to provide to the user device based upon the one or more environment characteristics. The method also includes providing the appropriate amount of font information of the web asset to the user device for presenting the web asset.

Implementations may include one or more of the following features. One of the one or more environment characteristics may represent throughput of the communication connection, bandwidth of the communication connection, processing time, the amount of font information to be provided to the user device, capabilities of the user device, etc. Determining the appropriate amount of font information of the web asset to provide to the user devices may be based upon the content of the web asset. The font information may include one or more font subsets for the user device to present the content of the web asset. The font information may be for presenting a first page of the web asset. The method may further include providing additional font information of the web asset to the user device as the first page of the web asset is being presented. The font information of the web asset may be previously produced.

In another aspect, a system includes a first computing device that includes a memory configured to store instructions. The first computing device also includes a processor to execute the instructions to perform a method that includes receiving one or more environment characteristics of a communication connection between a user device and a font provider. The method also includes determining an appropriate amount of font information of a web asset to provide to the user device based upon the one or more environment characteristics. The method also includes providing the appropriate amount of font information of the web asset to the user device for presenting the web asset.

Implementations may include one or more of the following features. One of the one or more environment characteristics may represent throughput of the communication connection, bandwidth of the communication connection, processing time, the amount of font information to be provided to the user device, capabilities of the user device, etc. Determining the appropriate amount of font information of the web asset to provide to the user devices may be based upon the content of the web asset. The font information may include one or more font subsets for the user device to present the content of the web asset. The font information may be for presenting a first page of the web asset. The processor may execute instructions to provide additional font information of the web asset to the user device as the first page of the web asset is being presented. The font information of the web asset may be previously produced.

In another aspect, one or more computer readable media storing instructions that are executable by a processing device, and upon such execution cause the processing device to perform operations including receiving one or more environment characteristics of a communication connection between a user device and a font provider. Operations also include determining an appropriate amount of font information of a web asset to provide to the user device based upon the one or more environment characteristics. Operations also include providing the appropriate amount of font information of the web asset to the user device for presenting the web asset.

Implementations may include one or more of the following features. One of the one or more environment characteristics may represent throughput of the communication connection, bandwidth of the communication connection, processing time, the amount of font information to be provided to the user device, capabilities of the user device, etc. Determining the appropriate amount of font information of the web asset to provide to the user devices may be based upon the content of the web asset. The font information may include one or more font subsets for the user device to present the content of the web asset. The font information may be for presenting a first page of the web asset. The computer readable media may store further instructions that are executable by a processing device, and upon such execution cause the processing device to perform operations including to provide additional font information of the web asset to the user device as the first page of the web asset is being presented. The font information of the web asset may be previously produced.

In another aspect, a computer-implemented method includes receiving data representing content of one or more web assets. The method also includes determining an appropriate amount of font information for the one or more web assets to provide to a user device based upon the data representing the content of the one or more web assets, and, storing the determined appropriate amount of font information.

Implementations may include one or more of the following features. The method may further include providing the stored font information to the user device for presentation of the one or more web assets. Determining the appropriate amount of font information may be based upon one or more sources of the one or more web assets. Determining the appropriate amount of font information may be based upon one or more capabilities of the user device. The font information may include a font subset.

In another aspect, a system includes a first computing device that includes a memory configured to store instructions. The first computing device also includes a processor to execute the instructions to perform a method that includes receiving data representing content of one or more web assets. The method also includes determining an appropriate amount of font information for the one or more web assets to provide to a user device based upon the data representing the content of the one or more web assets, and, storing the determined appropriate amount of font information.

Implementations may include one or more of the following features. The method may further include providing the stored font information to the user device for presentation of the one or more web assets. Determining the appropriate amount of font information may be based upon one or more sources of the one or more web assets. Determining the appropriate amount of font information may be based upon one or more capabilities of the user device. The font information may include a font subset.

In another aspect, one or more computer readable media storing instructions that are executable by a processing device, and upon such execution cause the processing device to perform operations including receiving data representing content of one or more web assets. Operations also include determining an appropriate amount of font information for the one or more web assets to provide to a user device based upon the data representing the content of the one or more web assets, and, storing the determined appropriate amount of font information.

Implementations may include one or more of the following features. Operations may further include providing the stored font information to the user device for presentation of the one or more web assets. Determining the appropriate amount of font information may be based upon one or more sources of the one or more web assets. Determining the appropriate amount of font information may be based upon one or more capabilities of the user device. The font information may include a font subset.

These and other aspects and features and various combinations of them may be expressed as methods, apparatus, systems, means for performing functions, program products, and in other ways.

Other features and advantages will be apparent from the description and the claims.

### DESCRIPTION OF DRAWINGS

FIG. 1 illustrates exemplary content that may be transferred through a computer network.
FIG. 2 is a block diagram of an Internet based computer network.
FIGs. 3 and 4 illustrate using environment characteristics for managing font delivery.
FIG. 5 illustrates requesting and delivering a software agent and a font subset from a font provider.
FIG. 6 is an exemplary file for producing a webpage.
FIGs. 7, 8 and 9 illustrate examples of code instructions.
FIG. 10 is an example flow chart of operations of a font subset manager.
FIG. 11 is an example flow chart of operations of a font subset manager.
FIG. 12 is a block diagram of computing devices and systems.

### DETAILED DESCRIPTION

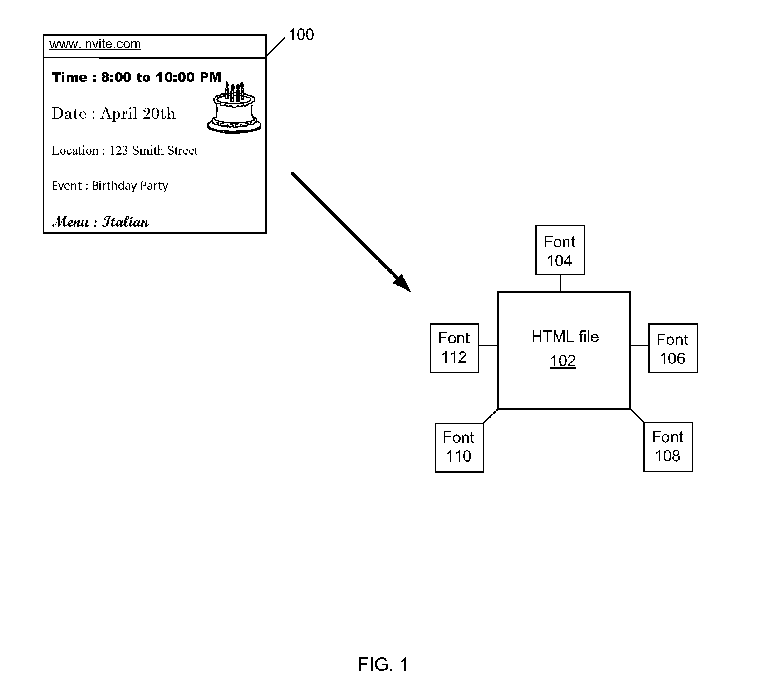

Referring to FIG. 1, an exemplary webpage 100 is illustrated that may be accessed through the Internet (or other type of computer network) by a user of a computing device (e.g., computer system, personal digital assistant (PDA), cellular telephone etc.). For example, by providing an appropriate uniform resource locator (URL) to a web browser, the webpage may be accessed, packaged and sent from a corresponding content provider to the user's computing device for display. In the illustrated example, the content of the web page 100 is a birthday party invitation that includes text and graphics and may be accessed from a particular URL (i.e., www.invite.com). To provide an eye-catching invitation, multiple fonts are used that provide different typefaces, each of which can be considered as providing stylistic characters or glyphs. A "character" can be considered as a member of a set of shapes used for the organization, control and representation of information, and, a "glyph" can be considered as a specific instance of a character.

Once accessed, a content provider may use one or more techniques to provide the content of the webpage 100 to the user's computing device. For example, the webpage 100 may be represented in one or more files (e.g., file 102) that use a markup language such as hypertext markup language (HTML) so that the webpage 100 conforms to the browser executed by the computing device. Standards such as the World Wide Web Consortium (W3C) standards for HTML, CSS, XML and other standards may be implemented by the browser so the webpage 100 can be properly rendered on various types of platforms capable of displaying electronic content (e.g. personal computers, wireless telephones, personal digital assistants, handheld computers, set-top boxes and Internet appliances, etc.).

Along with providing graphics (e.g., a graphic of a birthday cake in this instance), the one or more HTML files may reference one or more fonts used to render text on the webpage. For illustration, five different fonts are used in the webpage 100 to provide information associated with the invitation (e.g., time, date, location, event description, and menu). As such, the HTML file 102 calls out each font such that the recipient computing device is aware which font corresponds to each portion of textual information (e.g., present the date in a "Times New Roman" font). Upon receiving and executing the instructions included in the HTML file 102, the recipient computer device may locally retrieve the fonts needed to present the text. However, considerable amounts of computing devices are unable to locally store all the characters of each font that could be needed to render the webpage. Limited resources (e.g., memory) and the constant creation of new font types can limit each type of computing device from being ready to display text in any and all fonts. Fonts associated with different languages amplify the issue that many computing devices are unable to provide all font types. Languages such as Chinese, Japanese, Korean, etc. use alphabets of characters that may number in the tens of thousands (e.g., over 10,000 characters) and call for 1 MB to 20 MB of memory to store the characters of a single language. Such memory needs are impractical, specially for computing devices with less robust onboard memory (e.g., cellular telephones). Further, storing complete character sets for even a few fonts may be inefficient if only a few characters are needed from a set (to present a particular webpage). Referring to the illustrated example, a relatively small number of "Times New Roman" font characters are needed to present the event date (e.g., "A", "p", "r", "i", "1", "2", "0", "t" and "h") and storing the complete font character set may be considered an unwise use of device memory, certainly if a complete character set is stored for each possible user language (e.g., English, Chinese, Japanese, etc.).

To conserve the use of local memory, some conventional techniques provide complete font sets with the received webpage content (e.g., an HTML file) or initiate the retrieval of the complete character sets of needed fonts upon receipt of the file associated with the webpage. However, such techniques may still cause computing device memory to be filled with collections of font characters when only a few characters are actually being used by the webpage. For example, as illustrated in the figure, to present the webpage 100 on a computing device, complete font character sets 104, 106, 108, 110, 112 are provided along with the HTML file 102. As such, each possible character of the five fonts used by the webpage 100 is provided to the computing device, thereby consuming a considerable amount of memory of the computing device.

The time needed for transferring fonts along with bandwidth consumption also provides a concern. For example, transferring complete character sets of fonts associated with languages such as Chinese, Japanese and Korean may need considerable bandwidth and transfer time.

One or more techniques may be used to reduce the file transfer time, bandwidth consumption and needed memory space for preparing to present webpages such as webpage 100. For example, rather than providing complete character sets for each font, font subsets may be provided that include only the characters that appear in the webpage. As such, file transfer time and bandwidth needs are reduced and device memory is conserved while an appropriate set of font characters is provided for webpage presentation. Referring to the illustrated example, each of the font character sets 104-112 may be replaced with significantly smaller font subsets that can be provided with the HTML file 102 or relatively soon after receipt of the file. Similar to reducing transfer time and bandwidth needs based on font subsets for the stylistic appearance of characters, reductions may also be achieved for providing font subsets associated with different languages. For example, if a webpage contains only three hundred Chinese characters, it may be more efficient to provide a font subset that is restricted to only include the three hundred characters, which may reduce the size of the transferred font data from approximately 10 MB to 50 KB. In some situations while subsets may be produced for some font character sets (e.g., the Chinese language character set), other font character sets may be sent as complete sets. For example, due to the relatively small number of characters included in a complete font set (e.g., the Latin language character set), creating and transferring a subset may not significantly reduce the bandwidth or time needed to transfer the entire character set. Along with reducing the size of font character sets provided to a computing device to present a webpage or other types of electronic document, one or more techniques may be implemented to efficiently provide such font subsets to computing devices. For example, along with presenting the webpage, the user's computing device may be used for identifying the appropriate font subsets and subsequently request the identified subsets.

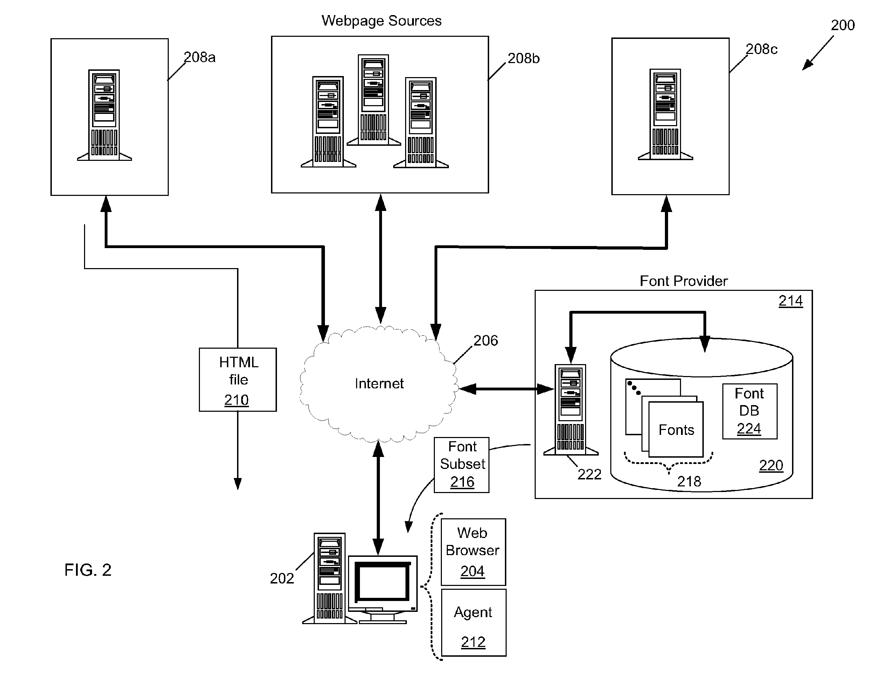

Referring to FIG. 2, a computer network 200 includes a computer system 202 that a user may interact with (e.g., using a keyboard or pointing device such as a mouse) identify a target webpage to be presented with the computer system. For example, a web browser 204 or similar software application may be executed by the computer system 202 for the user to target one or more webpages. Upon being identified, operations of the web browser 204 may include requesting, via the Internet 206, content from one or more webpage sources 208 a,b,c for the target webpage(s). As illustrated, in this particular example a webpage page is requested from webpage source 208a and a corresponding HTML file 210 is sent from the source through the Internet 206 to the computer system 202.

To identify the appropriate font subsets to present the webpage defined by the HTML file 210, the computer system 202 may use one or more techniques. For example, operations may be executed by the computer system 202 to scan the HTML file 210 to identify the individual font characters included in the webpage defined by the file. In one arrangement, the computer system 202 may execute a software agent 212 to identify the individual font characters and to send a request to initiate the production of font subsets (if appropriate) needed to present the webpage. Such agents can be considered as a software module that is executable in a substantially autonomous manner. For example, upon being provided to the computer system 202, a software agent may operate without considerable user interaction. By operating in a somewhat flexible manner, the software agent can adaptively identify font characters needed for webpage presentation. In this particular example, the software agent 212 scans the content of the HTML file 210 in a somewhat persistent manner for identifying the font characters. For example, the software agent may execute in a substantially continuous manner. In some arrangements the software agent is provided to the user computing device (e.g., computer system 202) very shortly after the delivery of the file or files (e.g., the HTML file 210). As such, electronic documents such as webpages, application pages, user interfaces, and the like may be perceived as being scanned nearly in real time as the documents are received.

The computer network 200 also includes a font provider 214 that determines to produce font subsets (when appropriate) based upon information provided by software agents (e.g., software agent 212) executed by user computing devices (e.g., computer system 202). Once produced, the subset or subsets (e.g., illustrated as font subset 216) are packaged and sent by the font provider 214 to the requesting computing device. Along with determining to produce one or more font subsets, the font provider 214 is also capable of determining if complete font character sets should be provided to the requesting computing device. For example, predefined rules may be used by the font provider 214 in determining whether a font subset should be sent. One such rule may indicate that font character sets associated particular languages (e.g., Chinese) should have subsets created due to the large size of the complete character set. Subset determinations may also be provided in a dynamic manner. For example, based upon achievable file transfer rates, a file size threshold (e.g., 2 MB) may be determined such that subsets are produced for character sets larger than the threshold. If a font character set size falls below the threshold, the entire character set may be sent as the file transfer rate may be considered within an efficient range. Such thresholds may be dynamically adjusted, for example, by monitoring the achievable transfer rates, the threshold may be changed. For example, as the level of achievable transfer rates decreases, the threshold for creating subsets for character sets may correspondingly be decreased (e.g., lowered from 2 MB to 1 MB). One or more factors may account for determining the transfer rates as being within an efficient range. For example, geographic location of the user computing device and the font provider may factor into whether a subset should be produced and sent in place of a complete character set. If both the font provider and the user computing device are located relatively nearby (e.g., both in the eastern United States), relatively high transfer rates may be achievable and the entire character set may be sent. For a situation in which the user computing device is remote from the font provider (e.g., one in the United States and the other in India), the font provider may determine to subset the font character set to be sent. Similar to location based determinations, time of day, season of year and other temporal factors may be used by the font provider to determine if subsets need to be produced for one or more font character sets identified for transmission.

In some arrangements, the font provider 214 may also provide the software agents to the computing devices for scanning received files (e.g., HTML file 210) for character identification. As such, the font provider 214 may operate independent of the webpage sources 208 a,b,c. Once a request is received from a user computing device, the font provider 214 may provide appropriate agent software to the requesting device. Once the electronic document is scanned by the software agent, appropriate fonts and font subsets may be provided by the font provided 214 based upon a request initiated by the executed agent.

To provide the fonts and font subsets, the font provider 214 typically needs access to one or more libraries of fonts that may be stored local or remote to the font provider. As represented in the figure, a library of fonts 218 is shown being stored in a storage device 220 (e.g., one or more hard drives, CD-ROMs, etc.) on site. Being accessible by a server 222, the font library 218 may be used along with information provided from software agents to produce appropriate font subsets that can be provided along with complete font character sets (if determined appropriate by the font provider). Illustrated as being stored in a single storage device 220, the font provider 214 may use numerous storage techniques and devices to retain a collection of accessible sets of fonts (e.g., for different font styles, languages, etc.). The font provider 214 may also access fonts at separate locations for subset production. For example, upon identifying characters needed for a font subset, the server 222 may be used to collect needed characters from one or more sources external to the font provider 214 (e.g., via the Internet 206).

Along with producing font subsets and providing them (along with complete font sets, if appropriate) to requesting computing devices, the font provider 214 may provide other functionality. For example, fonts and font subsets associated with particular webpages may be tracked for future requests. In one scenario, one or more font subsets (e.g., font subset 216) may be created for presenting a particular webpage (on a computing device). The association between the font subsets and the webpage may be identified (e.g., by the server 222) and stored for later retrieval. As such, the subsets needed to present the webpage in the future (e.g., on another computing device) can be quickly identified and provided to the requesting computing device. In one arrangement, a font database 224 is stored at the font provider 214 (e.g., on the storage device 220) and includes records that represent the association between webpages and font subsets (and fonts). In some instances, the association is identified from information provided by font subset requests sent to the font provider 214 (e.g., from a software agent). The association between a webpage and appropriate font subsets may also be stored prior to the webpage being selected by a user (e.g., based on directions and information provided by a webpage source). Other types of architectures and networking techniques may also be implemented for providing software agents and font subsets (and fonts) to user computing devices for presentation of electronic documents such as webpages.

In some arrangements other types of information may be used for determining whether or not to subset a font, e.g., for efficiently providing needed font information to a client device (computer system 202). For example, information that characterizes the environment (e.g., a communication link between the font provider 214 and the client device) may be used for font subsetting determinations. Such information may be used individually or in concert with other information, for example, information gather from the content of a web asset (e.g., information scanned from the HTML file 210 to identify font characters included in the webpage defined by the file). Along with using multiple types of information (e.g., communication characteristics, web asset content, etc.), previously stored information may be used for determining the appropriate font information (e.g., a font subset, a complete font set, etc.) to provide to one or more client devices. For example, information from a data base (e.g., font database 224) may be used for such determinations. Other types of previously stored information may also be used, for example, previously collected communication characteristics (e.g., data transfer rates for links) may be used for making the determination.

By using information from these various sources individually or in concert, appropriate decisions can be made as to whether a font subset (or multiple subsets) should be created and sent by the font provider 214 or whether a complete font set (or multiple complete sets) should be sent to the client device. The information used for the determinations can be considered relatively static or dynamic, for example, while the content of a web asset can be relative static, environmental characteristics (e.g., properties of the communication link between the font provider and a client device) may vary with time (e.g., changing data transfer rates over the course of a day) and location (e.g., data transfer rate changes due to moving the client device, a mobile device, to a different location). Due the variations, one or more techniques may be implemented so relatively current communication characteristics may be used for font subsetting determinations. For example, one or more environmental characteristics (e.g., communication link properties, capabilities of a client device) may be monitored and collected for use in such determinations. Various types of data monitoring and collection techniques may be implemented, for example, one or more communication link characteristics may be passively, actively, etc. collected by the client device, the font provider 214 or by operations executed by the client device and font provider in concert. Equipment separate from the client device and the font provider 214 may also be implemented. Information may also be exchanged between one or more client devices, the font provider 214 and potentially other devices to assist in font subset determinations, for example, characteristics of a client device (e.g., display capabilities, etc.) may be provided to the font provider 214. As such, environmental characteristics associated with various equipment, communication links, etc. may be used in font subset determinations.

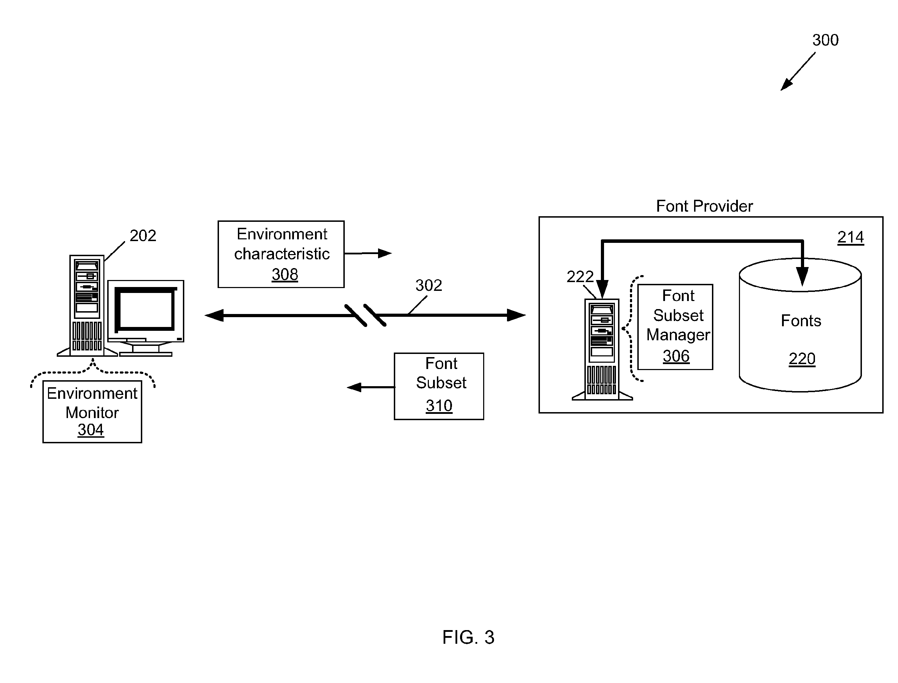

Referring to FIG. 3, a diagram 300 represents some potential operations for gathering information for determining whether subsets or complete sets of one or more fonts subsets should be provided to a client device (e.g., the computer system 202). In this particular arrangement, one or more environmental characteristics are collected by the client device and provided to the font provider 214 for font subset determinations. To perform such information collections, the computer system 202 may execute one or more operations, for example, one or more characteristics of a communication link 302 may be measured by at the computer system 202 and provided to the font provider 214 for processing. In this arrangement, an environment monitor 304 is executed by the computer system 202 to collect environment characteristic information. While a client device (e.g., the computer system 202) is illustrated as collecting such environmental characteristics, such operations may be executed at other locations, individually or in combination with the operations at the client device. For example, environmental characteristics (e.g., of the communication link 302) may be measured and quantified by the font provider 214. In one arrangement, the server 222 may collect information regarding the communication link for assist in determining font subset operations.

Various types of information may be collected that is representative of environmental characteristics. For example, some characteristics may reflect the ability of a communication link (e.g., link 302) to transfer data among one or more client devices (e.g., computer system 202) and the font provider 214. Such characteristics may be associated with the time, rate, etc. for transferring information. Throughput, bandwidth, transmission rates, etc. of the communication link 302 may be measured and quantified by the environment monitor 304. Along with the movement of information, establishing communication between devices (e.g., the computer system 202, the server 214) may be monitored for font subsetting decisions. For example, connection characteristics (e.g., connection speed, bandwidth, HTTP handshake latency, etc.), overhead time (e.g., time needed to send and process a request for font subsetting, etc.), time needed to establish a data connection between the computer system 202 and the server 214 may be measured (e.g., by the environment monitor 304) and provided to the font provider 214. Other quantities associated with information transfer over the communication link 302 between one or more client devices and the font provider 214 may be identified. For example, protocols (e.g., an internet protocol (IP)) used by the client device and/or the font provider 214 may be identified and used for font subsetting determinations. Ethernet, DSL, Cable, FIOS are examples of some types of protocols maybe identified. Whether the communication link 302 includes wired or wireless communication technology (e.g., wired, wireless access points, etc.) may also be a factor into the determinations. Device options, selected services, ranges of connectivity options (GPRS/Edge, 3G, 4G, etc.) may also be monitored for changes in link capabilities. For example, anticipated connection speeds may be considered to be relatively fast (e.g., mobile devices connected to 3G or 4G networks), however, actual signal strength and connection speed may still vary over time and adversely affect data transfer capabilities (e.g., web page download time) and user experience.

Similar to information associated with the communication link 302, other types of information may be collected and provided to the font provide 214 for subset determinations. For example, characteristics of one or more client devices may be provided. Such characteristics may be associated with display capabilities (e.g., screen specifications such as screen size and resolution), processing (e.g., operating system used by the device, type of browser executed by the device) and storage capabilities, etc., of the client device (e.g., the computer system 202), which can be provided and used by the font provider 214 to determined instances when font subsetting is appropriate or not. Such device characteristics may be identified locally at the device, e.g., by the environmental monitor 304, remotely, e.g., by the font provider 214, or by a combination of local and remote operations.

The environmental monitor 304 may be implemented in one or more arrangements to provide the monitoring functionality at the client device (e.g., the computer system 202). For example, the environmental monitor 304 may be implemented as one or more agents (e.g., similar to the agent 212 show in FIG. 2) that may be provided to the computer system 202 through one or more methodologies (e.g., downloaded from or provided by the font provider 214). One or more applications (e.g., a web browser) may also implement the environmental monitor 304. Along with collecting information (e.g., to be provided to the font provider 214), the environmental monitor 304 may provide additional functionality such as tracking data and performing statistical analysis upon the collected data and related information. The collected and processed information may then be provided to the font provider 214 to optimize font subsetting and font processing decisions.

To dynamically make such font subsetting and processing decisions, one or more techniques may be implemented by the font provider 214. In the illustrated example, a font subset manager 306 is executed by the server 222 (located at the font provider 214). From the information provided to the font provider 214 from the client device or devices (e.g., a message 308 that contains environment characteristic information), the font subset manager determines whether one or more font subsets (e.g., represented by font subset 310) should be sent to the client device (e.g., the computer system 202) or if a complete font subset should be delivered to the device. In some arrangements the font subset (or subsets) are produced and sent based upon delivery of the environmental characteristic information (e.g., the message 308 is received by the font provider 214). Previously produced font subsets may also be sent based upon delivery of the environmental characteristic information. For example, due to previously experienced conditions one or more font subsets may be produced for delivery to one or more computing devices. Along with being sent, the font subsets may be stored for delivery at other instances (e.g., when similar environmental characteristics are provided by another computing device), thereby increasing efficiency by allowing one or more previously produced font subsets to be reused by the font provider 214.

In addition to executing font subsetting determinations, the font subset manager 306 may also provide other types of functionality. For example, data provided from the client devices may be further processed and stored (e.g., in the storage device 220). In some arrangements, such processing may include developing models, e.g., for predicting environmental characteristics. For example, based upon received data (e.g., from client devices) representative of one or more characteristics of the communication link 302 (e.g., throughput, bandwidth, etc.) over a period of time, models may be developed for predicting the environment characteristic (e.g., estimates of the throughput for a particular time). Data processing may also include producing (and storing) reports for archiving information such as font subsetting decisions for various input considerations. For example, for presenting particular content (e.g., a web asset) on a particular client device and under certain conditions (e.g., throughput on a communication link), the font subset manager 306 may reach a decision of subletting a particular font (or alternatively, providing a complete character set for the font). By storing information that reflects this decision and the conditions that lead to the decision, future decisions may be expedited if the font subset manager 306 recognizes that the conditions have reoccurred. The font subset manager may also execute operations for adjusting the fonts, for example, operations for adjusting fonts to improve clarity and the legibility of the produced text (e.g., optimizing font hinting for a particular operating system, font engine, client device screen resolution, etc.).

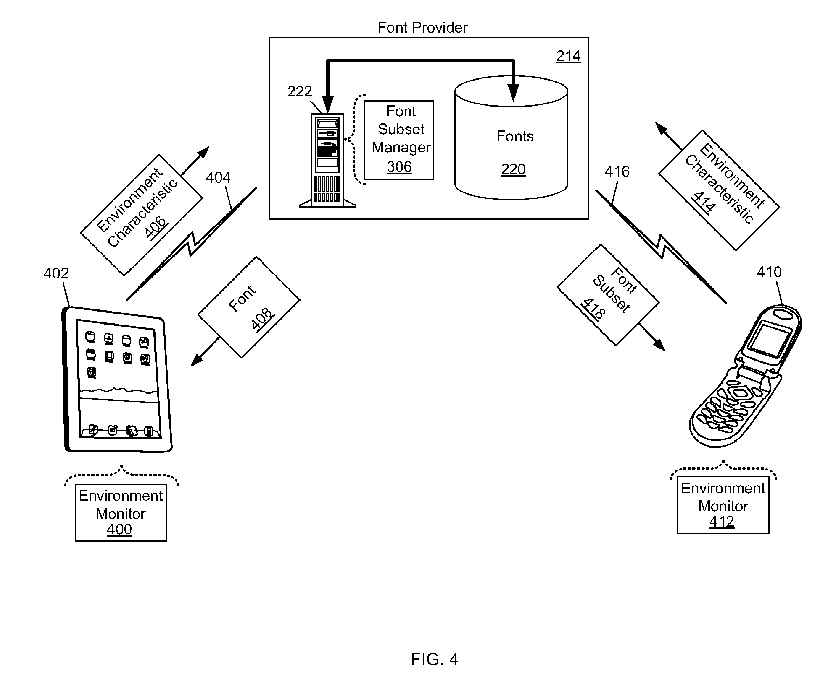

Referring to FIG. 4, a diagram 400 is presented that illustrates that font subsetting decisions by the font provider 214 may depend upon a variety of environment characteristics such as location of client device, which may dynamically change. Similar to FIG. 3, subsetting decisions are provided by the font subset manager 306 executed by the server 222, e.g., to subset or provide complete font sets (from the storage device 220) to one or more client devices. In this particular arrangement, the location of the client device serves as the determining factor in regards to font subsetting. For example, an environment monitor 400 being executed by a tablet computing device 402 senses that relatively high throughput communication links may be established with the font provider 214. A communication link 404 is established and a message 406 is sent to the font provider 214 to reflect the favorable communication characteristic (along with other information). For example, the tablet computing device 402 may be present at a location that provides for Wi-Fi communications (e.g., through the Internet) with the service provider 214. As such, large data files (e.g., containing font sets) can generally be transferred to the tablet computing device 402 in a reasonable amount of time. From this throughput characteristic (and potentially other information), the font subset manager 306 decides that complete font sets (e.g., font set 408) may be sent, received and processed by the tablet computing device 402 within a reasonable time period to present the associated web asset content without degrading the viewing experience of a user.

Other environments may lack the ability to provide appropriate throughput levels, and the font provider 214 may determine that font subsetting is needed (for transferring one or more font sets) to provide an appropriate viewing experience. For example, Latin fonts are generally considered as needing relatively small file sizes for storage and throughput levels in regions where Latin-based languages are spoken are sufficiently large enough to allow complete font sets to be transferred to client devices in a reasonable time. Unfortunately, both assumptions (about file sizes and throughput) may not be consistently correct, and for example, a Latin font with an above-average file size delivered over a slow connection may cause significant delays in presenting a web asset to a device viewer. Further, environment characteristics may change, in some cases quite dynamically over a period of time, as the client device changes location, etc. As such, the environment characteristics may be frequently monitored by the environmental monitor 400 and/or the font subset manager 306. For example, the font provider 214 may request condition updates from the one or more client devices (e.g., the tablet computing device 402) that have established communications links (e.g., a periodic polling message may be sent from the font provider 214 to request updates). In some arrangements, the client devices may manage the condition updates (e.g., the environment monitor 400 sends updates at periodic intervals, based upon events such as power-up, reset, etc.).

As illustrated in the figure, a remotely located cellular telephone 410 may execute an environment monitor 412 that gathers environmental information such as the reception capabilities of the phone 410 due to its current location (e.g., out of Wi-Fi range) and provides this information (potentially with other information such as the limited processing and storage capacity of the cellular telephone) in a message 414 to the font provider 214 (e.g., over a low throughput wireless communication link 416). Provided this poor throughput and limited device capabilities information, the font subset manager 306 may determine that font subsetting is needed to provide font data to the cellular telephone 410 such that web asset content may be processed and presented for viewing in a reasonable time frame and the viewer does not become bored and disinterested in waiting for the presentation. Based on this scenario, one or more font subsets may be produced by the font provider 214 and sent to the cellular telephone 412 (e.g., as illustrated, in font subset file 418 over the communication link 416) to provide the needed font information for presenting the web asset on the phone's display. As such, a reduced amount of information is provided to the phone such that the web asset is presented without losing the attention of the viewer.

Along with monitoring environment characteristics (e.g., communication link throughput levels, client device capabilities, etc.) other information may be used the font provider 214 to determine whether or not fonts should be subsetted prior to delivery to one or more client devices. In one arrangement, the content of the web asset (to be presented) may be used for assisting in the determination. For example, if a considerable percentage of characters of a font is needed (e.g., 80% of a font's characters is needed to present the first page of a web asset), sending a complete set of the font's character to the client device could be considered optimum. Content based information may also be associated with the source or sources of a particular web asset. Further, in some arrangements source information may be used with device capability information for assisting in font subsetting determinations. For example, websites may support different content options that are designed to account for inherent capabilities of particular client devices such as mobile devices (e.g., screen size, processing power, limited mobile browser functionality, etc.). One instance of such differences is the content and styling of a website (e.g., http://www.yahoo.com) prepared for a more conventional computing device (e.g., desktop computer system, laptop computer system, etc.) versus a website (e.g., http://m.yahoo.com) designed for a relatively more limited computing device (e.g., a smartphone). In some arrangements, the environmental monitor 400 may be implemented as an agent and can be exploited to determine if the client device is of one type (e.g., a PC-based device) or another (e.g., a mobile device device). As such, the client devices and their capabilities can be monitored and used in concert with other environment characteristics to dynamically determine whether or not one or more fonts should be subsetted prior to transmission to the client device.

Other techniques and methodologies may be implemented for optimizing the delivery of fonts based on the environment (e.g., of the client device) and the content of the web asset to be presented. For example, font subsetting may be executed (by the font provider 214) for some portions of a web asset and not performed for other asset portions. For example, due to a low throughput communication link, one or more font subsets may be provided to a client device for presenting as one portion of a web asset (e.g., the first page of the asset). While that portion (e.g., the first page) is being presented (and supposedly reviewed by a viewer), complete font sets and/or font subsets for viewing the other portion (or portions) of the web asset (e.g., the remaining pages of the web asset) are prepared and sent to the web asset. Initiating the transfer of the font for the subsequent portions of the web asset may be scheduled for one or more time periods. For example, preparing the sending the font information (e.g., font subsets, complete font sets, etc.) may be initiated as the font information is prepared and sent for the initial portion of the web asset. In some arrangements, font information for subsequent portions of the web asset may be prepared and sent after the font information has been prepared and sent for the initial portion of the web asset. As such, font information may be sent from the font provider 214 in the background as earlier sent font information is readily available for content rendering by the client device. Such operations may reduce (e.g., minimize) the time needed to display a first page while enabling full font functionality for the remaining subsequent page views. Other proportioning schemes may also be implemented for font information delivery, for example, frequently used fonts that call for less memory space may be initially sent for use while larger font sets that are less frequently used by a web asset may be sent (e.g., in subsets, complete sets, etc.) afterwards in the background. Similar to other font subsetting arrangements, once a font subset has been produced (e.g., for delivery to a client device over a low throughput connection), the subset may be stored (e.g., in the storage device 220) for reuse. For example, once produced and stored, a font subset may be reused for other client devices regardless of current environment characteristics (e.g., throughput, connection speed, etc.).

The font subset manager 306 and/or the environmental monitors 400, 412 may provide other types of functionality. For example, content of a web asset (e.g., a web page) may be monitored (remotely) by the font subset manager 306 for changes (e.g., content being added, deleted, adjusted, etc.). When a change is detected in the content, which could be provided from one or multiple sources (e.g., a webpage that includes content from a number of websites), the font subset manager 306 may dynamically produce one or more subsets, adjust previously prepared subsets, etc. As such, font subsets and the decision to send one or more subsets to a client device may be determined by the font subset manager 306 prior to the web asset is requested, thereby reducing response time of the font provider 214 in making a font subset readily available for download when requested.

In addition to the environmental information (e.g., achievable throughput for transferring font data to a client device, bandwidth analysis, statistics representing communication overhead, etc.), information regarding content of the requested web asset (e.g., fonts present in a requested webpage, complete font file sizes, etc.) may also be included in determining whether or not to produce and send font subsets to a client device. One or more techniques may be utilized for gathering information regarding the requested web asset. For example, one or more agents may be executed by a client device (after being downloaded from the font provider 214) to attain the information and provide it to the font provider 214 for analysis with other information (e.g., environment characteristics). From this information the font provider 214 may attempt to optimize processing of font requests with the goal of minimizing font download time and, at the same time, optimizing computational operations (e.g., of the server 222) by eliminating unnecessary processing steps, optimizing server response time, etc.

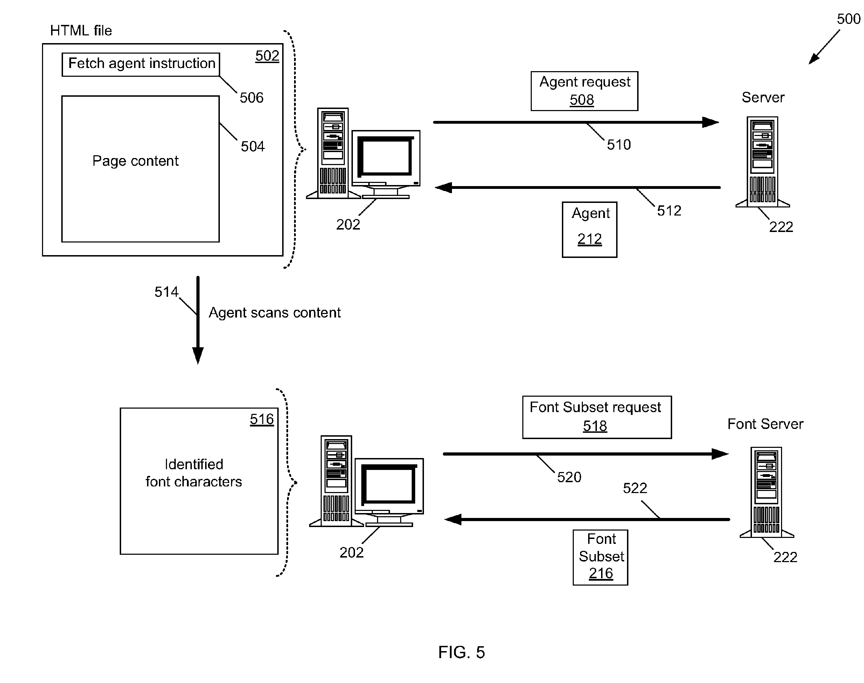

Referring to FIG. 5, a diagram 500 represents some operations for providing a software agent to a user's computing device for gathering and providing content information to the font provider 214 such that appropriate font subsets (and fonts) are provided for presenting a webpage of other type of web asset. As illustrated in FIG. 2, upon a user identifying a webpage of interest with a web browser executed on a computing device (e.g., providing a URL to the web browser), one or more files (e.g., HTML files) may be provided to the user's computing device from a corresponding webpage source. As illustrated, such a file 502 may include content 504 (e.g., text, graphics, video, audio, etc.) for presenting to the user (via the web browser). The file 502 may also contain one or more instructions 506 for requesting that a software agent be provided to the user's computing device 202. Upon executing the instructions (labeled in the figure "Fetch agent instruction"), delivery of a request 508 may be initiated from the user computing device (e.g., the computer system 202) to the font provider 214 (e.g., server 222), as represented by graphical arrow 510. In response to the request 508, an agent (e.g., the agent 212) is sent from the server 222 of the font provider 214 to the user computing device (e.g., computer system 202), as represented by graphical arrow 512. In some instances the delivery of the agent may occur very soon after the file is received and any delay may go unnoticed by a user. In some arrangements, other information may be provided by the request 508. For example, the webpage of interest may be identified in the request (e.g., URL of the webpage provided) so that the font provider 214 may determine if a one or more font subsets (and possibly fonts) have been previously produced for the webpage.

Received at the user computing device, the requested agent 212 is executed to scan the content 504 of the HTML file 502 (as represented by a graphical arrow 514) to identify characters for each font represented in the content. The agent 212 may also provide the functionality to identify each unique character of each font present. As such, multiple instances of the same font character may only be noted once by the agent, thereby consolidating the characters needed to be requested from the font provider 214 (for each received electronic document). In some arrangements, the agent 212 notifies the font provider 214 of each character identified for each font present in the webpage. Upon being provided this information, the font provider identifies each uniquely occurring character for each font for possible inclusion in a font subset. To provide such scanning operations, one or more techniques may be implemented, for example, the agent may parse the content 504 to identify each character present for each font. One or more filters may then be used (by the agent 212 or the font provider 214) to identify each unique character for each font. For example, if the characters "a", "B", and "c" for font A are detected in the content 504 and characters "x", "Y", and "Z" for font B are detected, the agent may identify a subset for font A as containing "a", "B" and "c" while the subset for font B may contain "x", "Y" and "Z". Once scanned, identified font characters 516 are used by the agent 212 to produce a font subset request 518. In general, the request 518 includes each character identified by the agent 212, however, some characters included in the content of the page content 504 may not be included in the request 518. For example, characters identified as possibly being locally stored at the user computing device may not be included in the request 518. As such, the agent 212 may exclude some characters included in the page content 504 from the subset request 518.

In some arrangements other information may be provided from the agent 212 to the font provider 214 for assisting with font subset determinations. For example, information regarding fonts locally stored on the computer system 202 (e.g., identification of resident fonts, character sets of the fonts, etc.) may be collected by the agent and provided to the font provider 214. Once received, the information may be used for one or more procedures such as determining if a font subset needs to be produced and provided to the computer system 202, determining which fonts, font character sets, etc. to be produced and delivered, etc. The information may also be used for procedures not related to font subset determinations, for example, the font provider may store the information or have the information stored (e.g., provide the information to another facility for storage) to later retrieval and use (e.g., tracking fonts residing at the computer system 202). By monitoring the fonts and font information that resides at one or more computing devices (e.g., computer system 202) and the font information that has been provided to each device (e.g., font subsets delivered), the font provider 214 may reduce redundant data transfers and the duplication of font data, thereby optimizing font information transfers and local storage. For example, one or more font transfer techniques may be utilized as described in "Font Data Streaming", United States Patent Application Serial No. 12/457,792 filed on June 22, 2009, the entire contents of which are hereby incorporated by reference.

One or more techniques may be implemented to provide the font subset request 518 to the server 222 of the font provider 214, as represented by graphical arrow 520. For example, for an agent represented in JavaScript, a technique associated with a protocol such as the hypertext transfer protocol (HTTP) may be used for transferring the request. By appending the identified unique characters to a query string of the URL of interest, a command (e.g., a GET command) can be used to provide the information to the server 222. Similarly, an agent that is provided as an application may provide the character information to the server 222 of the font provider 214 with a protocol such as HTTP. Once provided the request 518 for the font subset(s), the server 222 may use this information with additional information (e.g., environment conditions) to produce the one or more needed font subsets and complete font character sets (if appropriate) and reply to the user computing device. For example, as represented with graphical arrow 522, the font subset 216 (that may represent one or more font subsets and possibly one or more complete font character sets) is provided to the user computing device.

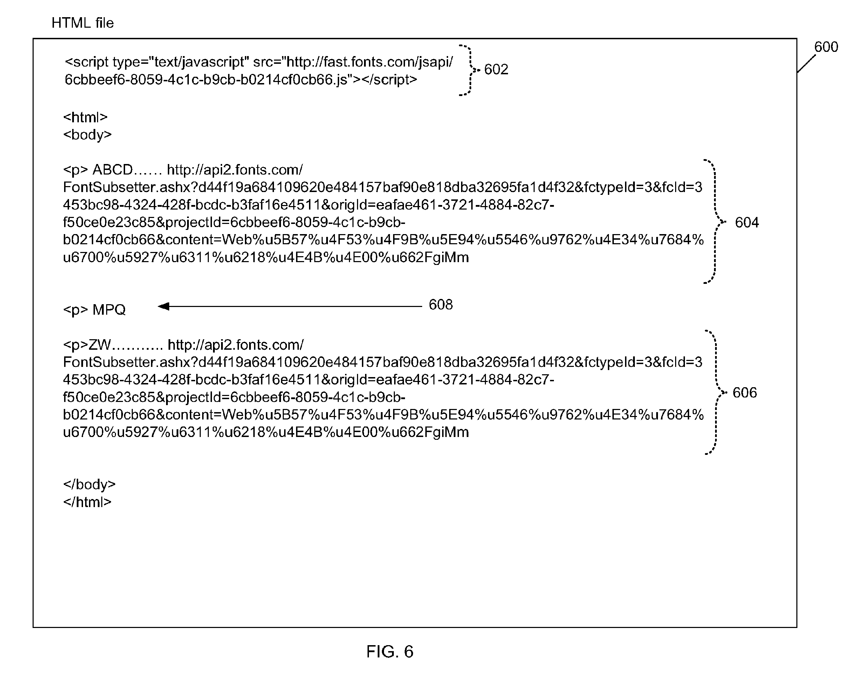

Referring to FIG. 6, instructions of an exemplary HTML file 600 are illustrated that include requesting an agent (such as the agent 212 shown in FIG. 2) and assigning fonts to particular characters. In this particular example, upon instruction 602 being executed (e.g., by the computer system 202), an agent is requested from a font provider (e.g., the font provider 214). Once received by the computer system 202, the agent is executed to analyze the contents of the HTML file 600. For example, the agent may step through each of the remaining lines of the HTML file 600 and identify each character and font used to present the webpage associated with the contents of the file. For example, by analyzing instruction 604, the agent may identify that characters "A", "B", "C" and "D" in "Frutiger" font are needed for webpage production. In this particular arrangement, the individual characters (e.g., "A B C D") are provided by the instruction 604 along with a URL for accessing the font. Similarly, the executed agent also identifies, in instruction 606, that characters "Z" and "W" need to be represented in "Frutiger" font to produce the webpage. As such, when producing a font subset request (e.g., request 518 shown in FIG. 5), the agent identifies each of the unique characters (i.e., "A", "B", "C", "D", "Z" and "W") and the corresponding font (i.e., "Frutiger") needed to produce the webpage. In some arrangements, while scanning the content of the file, the agent may come across characters that are not to be included in a font subset request. For example, the HTML file may include an instance in which locally stored fonts on the computer system (executing the file) are to be used for representing particular characters. As such, fonts do not need to be attained from sources external to the computer system. Instruction 608 of the exemplary HTML file 600 illustrates such an occurrence. In this instance, the characters "M", "P" and "Q" are called out by the instruction 608 without a URL for a particular font. As such, fonts local to the computer system executing the file 600 may be used to present the characters "M", "P" and "Q". Since a font or font subset is not needed for these particular characters, the agent does not include these characters in the request 518. However, while these characters are stored locally for this particular font, one or more of these characters may be included in the request for another font based upon another instruction (not shown) in the file 600 that calls out "M", "P" and/or "Q" as being needed in a font attained from a source external to the computer system.

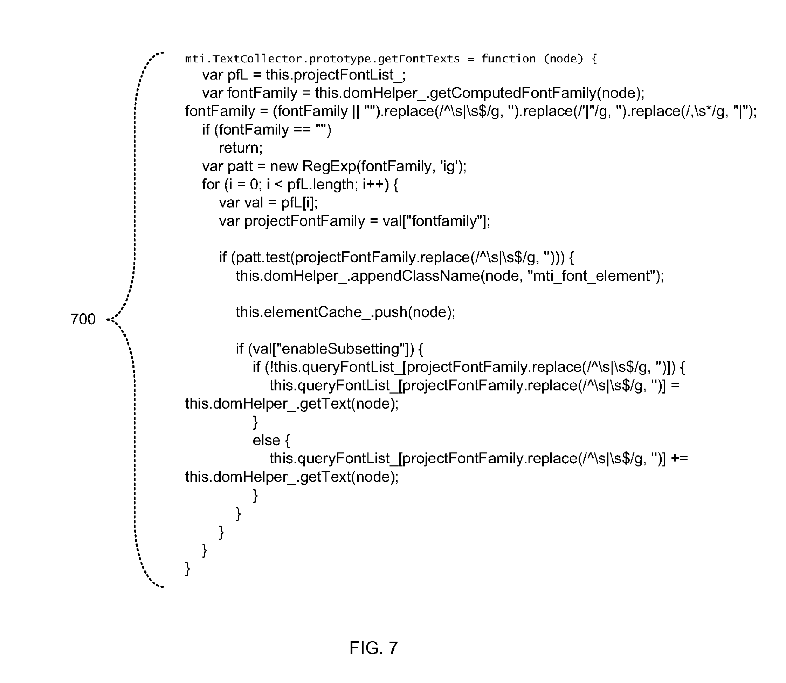

Referring to FIG. 7, one or more techniques may be implemented to analyze the content of a file such as the HTML file 600 (illustrated in FIG. 6) to identify characters for font subsets. For a JavaScript based agent, a browser independent library (e.g., Prototype, jQuery, etc. that emphasizes interactions between JavaScript and HTML), may be used to analyze text content. To provide this functionality, a Prototype, jQuery, etc. framework may be used to provide an agent for extracting unique characters from a string. The framework may also include an associative array (e.g., referred to as a JSON in some instances) for forming associations between the identified unique characters and a corresponding font. Stepping through the file in an iterative manner, the unique characters are identified and stored (e.g., cached) for further processing. The portion of code 700 presented in the figure can provide this functionality.

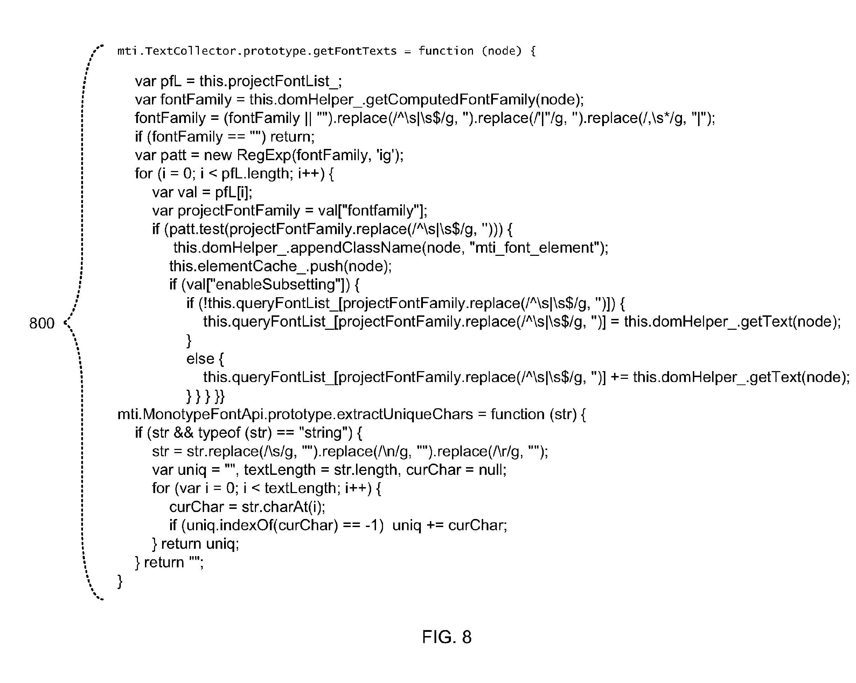

Referring to FIG. 8, upon identifying the unique characters, one or more techniques may be implemented to group the identified characters accordingly based upon font. For example, each unique character (e.g., "A", "B", "C", "D", "Z" and "W") identified for a particular font (e.g., "Frutiger") is a member of a group for that font. Additionally, for fonts that have relatively few members (e.g., a font associated with the Latin language), a group of unique characters may not be formed. For such fonts that include relatively fewer members, the entire font set may be sent without consuming considerable computational resources such as transfer time and bandwidth (e.g., as determined in concert with environment characteristics). As such, the complete font set may be provided (e.g., from the font provider) for producing characters of that font. The portion of code 800 presented in the figure can provide this functionality.

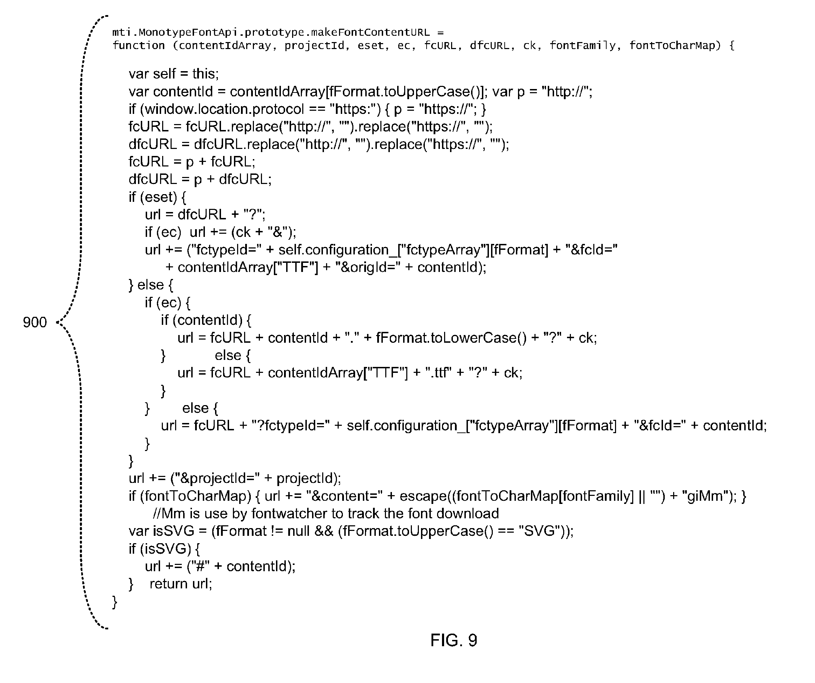

Referring to FIG. 9, once the identified unique characters for each font have been grouped (along with any identified fonts that have relatively small character sets), the agent provides this information to the font provider 214 (e.g., to the server 222 of the font provider). One or more techniques may be used to provide this information. For example, a command such as the HTTP GET command may be used to append identified characters and corresponding fonts to a URL query string. Upon receiving a request (provided by the HTTP GET command), the font provider 214 (e.g., the server 222 of the font provider) creates and sends one or more appropriate font subsets to the requesting computer system. Complete font sets may also be sent for identified fonts that include relatively few characters, based upon predefined rules associated with one or more factors (e.g., geographic location of user and/or font provider, temporal information, data transfer parameters such as achievable transfer rate, etc.). To provide the identified unique characters and corresponding fonts, a portion of code 900 is presented in the figure that can provide this functionality.

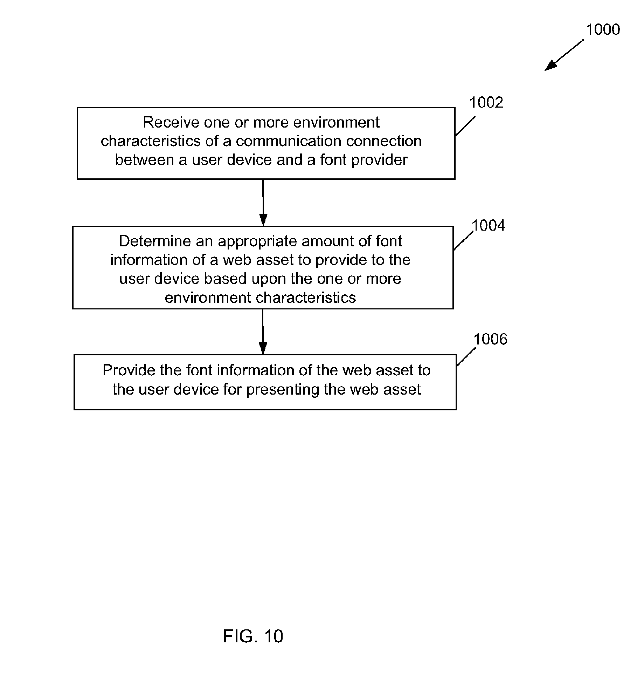

Referring to FIG. 10, a flowchart 1000 represents operations of a font subset manager (e.g., the font subset manager 306 shown in FIG. 3). Operations of the font subset manager 306 are typically executed by a single computing device (e.g., the server 222), however, operations of the font subset manager may be executed by multiple computing devices. Along with being executed at a single site (e.g., the font provider 214), operation execution may be distributed among two or more locations.

Operations of the font subset manager may include receiving 1002 one or more environment characteristics of a communication connection between a user device and a font provider. For example, environmental characteristics may represent quantities (e.g., throughput, connection establishment time, bandwidth, etc.) of a communication link between a client device (e.g., a tablet computing device, a smartphone, etc.) and equipment of a font provider (e.g., the server 222). Environmental characteristics may also represent capabilities (e.g., display resolution, screen size, web browser being executed by the device, etc.) of the client device. Operations of the font subset manager may also include determining 1004 an appropriate amount of font information of a web asset to provide the user device based upon the one or more environment characteristics. For example, based on the abilities of a communication link (e.g., having reasonable throughput), the font subset manager can determine whether or not to subset one of more fonts (used by the web asset) for efficient transfer of the fonts from the font provider to the client device. Along with using the received environment characteristics, other information such as the information associated with the content of the web asset may be used in making the determination. Operations of the font subset manager may also include providing 1006 the font information of the web asset to the user device for presenting the web asset. For example, if determined that one or more font subsets are needed to provide the appropriate font characters for presenting the content of the web asset, the font subset manager may initiate the production and transfer of the font subset(s) to the client device.

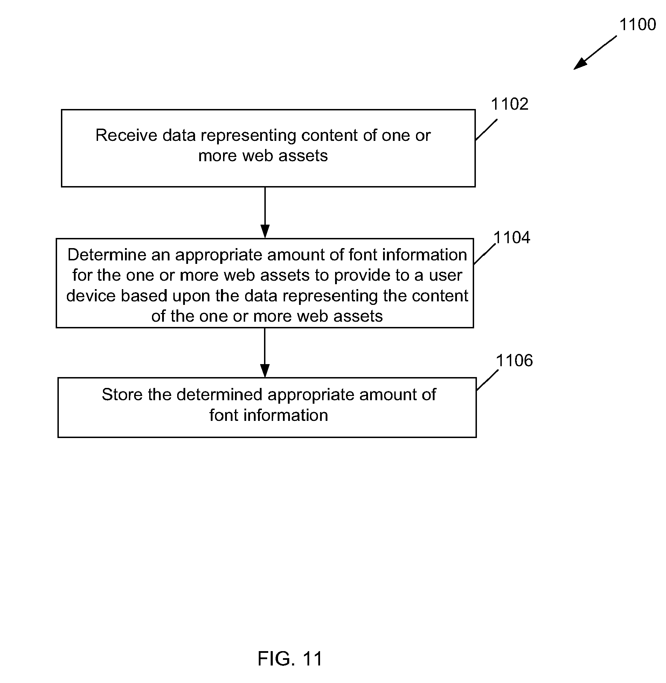

Referring to FIG. 11, a flowchart 1100 represents operations of a font subset manager (e.g., the font subset manager 306 shown in FIG. 3). As mentioned, operations of the font subset manager 306 are typically executed by a single computing device (e.g., the server 222), however, operations of the font subset manager may be executed by multiple computing devices. Along with being executed at a single site (e.g., the font provider 214), operation execution may be distributed among two or more locations.

Operations of the font subset manager may include receiving 1102 data representing content of one or more web assets. For example, the font subset manager may receive data that represents various types of websites, webpages, etc. from one or more sources (e.g., website developers, website providers, website repositories, etc.). In some arrangements the font provider (where the font subset manager is executed) may actively monitor web asset sources and determine if a new asset is accessible, if a web asset has been updated, etc. Based upon the monitoring, the web asset may take action. Such information may also be provided to a relatively passive font provider. For example, as a new web asset comes online the source of the new asset may alert and provide information to the font provider. Operations of the font subset manager also include determining 1104 an appropriate amount of font information for the one or more web assets to provide to a user device based upon the data representing the content of the one or more web assets. For example, based upon the content of a web asset (and e.g., the capabilities of the user device to receive the web asset), the font subset manager may determine if one or more font subsets should be produced and provided to the user device for presenting the web asset or assets. Operations also include storing 1106 the determined appropriate amount of font information. By storing the information (e.g., one or more font subsets), the font subset manager may be capable of initiating the retrieval of the information at appropriate instances for delivering to one or more user devices (e.g., a device requesting access to the content of a corresponding web asset).

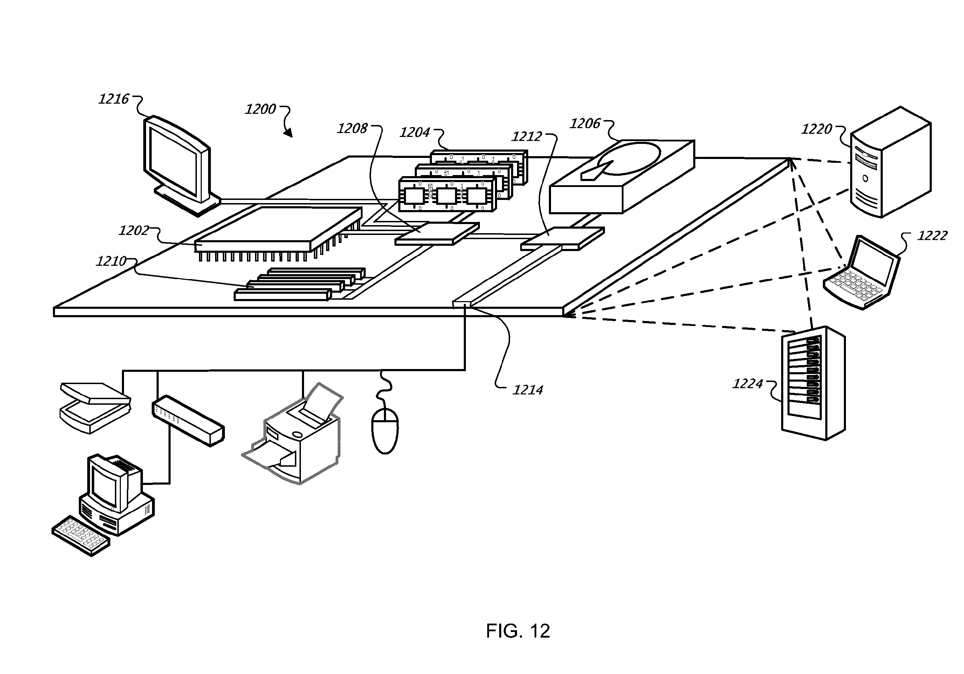

FIG. 12 is a block diagram of computing systems 1200 that may be used and implemented to perform operations associated with the font subset manager 306. The computing systems may also be used by the font provider 214 and or as a user device to execute operations. Computing device 1200 is intended to represent various forms of digital computers, such as laptops, desktops, workstations, personal digital assistants, servers, blade servers, mainframes, and other appropriate computers. The computing device 1200 may also be incorporated into other devices such as printers, scanners, etc.

Computing device 1200 includes a processor 1202, memory 1204, a storage device 1206, a high-speed interface 1208 connecting to memory 1204 and high-speed expansion ports 1210, and a low speed interface 1212 connecting to low speed bus 1214 and storage device 1206. Each of the components 1202, 1204, 1206, 1208, 1210, and 1212, are interconnected using various busses, and can be mounted on a common motherboard or in other manners as appropriate. The processor 1202 can process instructions for execution within the computing device 1200, including instructions stored in the memory 1204 or on the storage device 1206 to display graphical information for a GUI on an external input/output device, such as display 1216 coupled to high speed interface 1208. In other implementations, multiple processors and/or multiple buses can be used, as appropriate, along with multiple memories and types of memory. Also, multiple computing devices 1200 can be connected, with each device providing portions of the necessary operations (e.g., as a server bank, a group of blade servers, or a multi-processor system).

The memory 1204 stores information within the computing device 1200. In one implementation, the memory 1204 is a computer-readable medium. In one implementation, the memory 1204 is a volatile memory unit or units. In another implementation, the memory 1104 is a non-volatile memory unit or units.

The storage device 1206 is capable of providing mass storage for the computing device 1200. In one implementation, the storage device 1206 is a computer-readable medium. In various different implementations, the storage device 1206 can be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 1204, the storage device 1206, memory on processor 1202, or the like.

The high speed controller 1208 manages bandwidth-intensive operations for the computing device 1200, while the low speed controller 1212 manages lower bandwidth-intensive operations. Such allocation of duties is exemplary only. In one implementation, the high-speed controller 1208 is coupled to memory 1207, display 1216 (e.g., through a graphics processor or accelerator), and to high-speed expansion ports 1210, which can accept various expansion cards (not shown). In the implementation, low-speed controller 1212 is coupled to storage device 1206 and low-speed expansion port 1214. The low-speed expansion port, which can include various communication ports (e.g., USB, Bluetooth, Ethernet, wireless Ethernet) can be coupled to one or more input/output devices, such as a keyboard, a pointing device, a scanner, or a networking device such as a switch or router, e.g., through a network adapter.

The computing device 1200 can be implemented in a number of different forms, as shown in the figure. For example, it can be implemented as a standard server 1220, or multiple times in a group of such servers. It can also be implemented as part of a rack server system 1224. In addition, it can be implemented in a personal computer such as a laptop computer 1222. Alternatively, components from computing device 1200 can be combined with other components in a mobile device (not shown).

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer-readable medium for execution by, or to control the operation of, data processing apparatus. The computer-readable medium can be a machine-readable storage device, a machine-readable storage substrate, a memory device, a composition of matter affecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described is this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although the present invention is defined in the attached claims, it should be understood that the present invention can also be defined in accordance with the following embodiments:
In embodiment 1, a computer-implemented method comprising:
   receiving one or more environment characteristics of a communication connection between a user device and a font provider;
   determining an appropriate amount of font information of a web asset to provide to the user device based upon the one or more environment characteristics; and
   providing the appropriate amount of font information of the web asset to the user device for presenting the web asset.
In embodiment 2 according to embodiment 1, wherein one of the one or more environment characteristics represents throughput of the communication connection.
In embodiment 3 according to any one of embodiments 1 to 2, wherein one of the one or more environment characteristics represents bandwidth of the communication connection.
In embodiment 4 according to any one of embodiments 1 to 3, wherein one of the one or more environment characteristics represents processing time.
In embodiment 5 according to any one of embodiments 1 to 4, wherein one of the one or more environment characteristics represents the amount of font information to be provided to the user device.
In embodiment 6 according to any one of embodiments 1 to 5, wherein determining the appropriate amount of font information of the web asset to provide to the user devices is based upon the content of the web asset.
In embodiment 7 according to any one of embodiments 1 to 6, wherein one or more of the environment characteristics represents the capabilities of the user device.
In embodiment 8 according to any one of embodiments 1 to 7, wherein the font information includes one or more font subsets for the user device to present the content of the web asset.
In embodiment 9 according to any one of embodiments 1 to 8, wherein the font information is for presenting a first page of the web asset.
In embodiment 10 according to any one of embodiments 1 to 9, further comprising:
   providing additional font information of the web asset to the user device as the first page of the web asset is being presented.
In embodiment 11 according to any one of embodiments 1 to 10, wherein the font information of the web asset is previously produced.
In embodiment 12, a system comprising:
   a first computing device comprising:
      a memory configured to store instructions; and
      a processor to execute the instructions to perform a method comprising:
         receiving one or more environment characteristics of a communication connection between a user device and a font provider;
         determining an appropriate amount of font information of a web asset to provide to the user device based upon the one or more environment characteristics; and
         providing the appropriate amount of font information of the web asset to the user device for presenting the web asset.
In embodiment 13 according to embodiment 12, wherein one of the one or more environment characteristics represents throughput of the communication connection.
In embodiment 14 according to any one of embodiments 12 to 13, wherein one of the one or more environment characteristics represents bandwidth of the communication connection.
In embodiment 15 according to any one of embodiments 12 to 14, wherein one of the one or more environment characteristics represents processing time.
In embodiment 16 according to any one of embodiments 12 to 15, wherein one of the one or more environment characteristics represents the amount of font information to be provided to the user device.
In embodiment 17 according to any one of embodiments 12 to 16, wherein determining the appropriate amount of font information of the web asset to provide to the user devices is based upon the content of the web asset.
In embodiment 18 according to any one of embodiments 12 to 17, wherein one or more of the environment characteristics represents the capabilities of the user device.
In embodiment 19 according to any one of embodiments 12 to 18, wherein the font information includes one or more font subsets for the user device to present the content of the web asset.
In embodiment 20 according to any one of embodiments 12 to 19, wherein the font information is for presenting a first page of the web asset.
In embodiment 21 according to any one of embodiments 12 to 20, wherein the processor executes the instructions to provide additional font information of the web asset to the user device as the first page of the web asset is being presented.
In embodiment 22 according to any one of embodiments 12 to 21, wherein the font information of the web asset is previously produced.
In embodiment 23, one or more computer readable media storing instructions that are executable by a processing device, and upon such execution cause the processing device to perform operations comprising:
   receiving one or more environment characteristics of a communication connection between a user device and a font provider;
   determining an appropriate amount of font information of a web asset to provide to the user device based upon the one or more environment characteristics; and
   providing the appropriate amount of font information of the web asset to the user device for presenting the web asset.
In embodiment 24 according to embodiments 23, wherein one of the one or more environment characteristics represents throughput of the communication connection.
In embodiment 25 according to any one of embodiments 23 to 24, wherein one of the one or more environment characteristics represents bandwidth of the communication connection.
In embodiment 26 according to any one of embodiments 23 to 25, wherein one of the one or more environment characteristics represents processing time.
In embodiment 27 according to any one of embodiments 23 to 26, wherein one of the one or more environment characteristics represents the amount of font information to be provided to the user device.
In embodiment 28 according to any one of embodiments 23 to 27, wherein determining the appropriate amount of font information of the web asset to provide to the user devices is based upon the content of the web asset.
In embodiment 29 according to any one of embodiments 23 to 28, wherein one or more of the environment characteristics represents the capabilities of the user device.
In embodiment 30 according to any one of embodiments 23 to 29, wherein the font information includes one or more font subsets for the user device to present the content of the web asset.
In embodiment 31 according to any one of embodiments 23 to 30, wherein the font information is for presenting a first page of the web asset.
In embodiment 32 according to any one of embodiments 23 to 32, further storing instructions that are executable by a processing device, and upon such execution cause the processing device to perform operations comprising:
   providing additional font information of the web asset to the user device as the first page of the web asset is being presented.
In embodiment 33 according to any one of embodiments 23 to 32, wherein the font information of the web asset is previously produced.
In embodiment 34, a computer-implemented method comprising:
   receiving data representing content of one or more web assets;
   determining an appropriate amount of font information for the one or more web assets to provide to a user device based upon the data representing the content of the one or more web assets; and
   storing the determined appropriate amount of font information.
In embodiment 35 according to embodiment 34, further comprising:
   providing the stored font information to the user device for presentation of the one or more web assets.
In embodiment 36 according to any one of embodiments 34 to 35, wherein determining the appropriate amount of font information is based upon one or more sources of the one or more web assets.
In embodiment 37 according to any one of embodiments 34 to 36, wherein determining the appropriate amount of font information is based upon one or more capabilities of the user device.
In embodiment 38 according to any one of embodiments 34 to 37, wherein the font information includes a font subset.
In embodiment 39, a system comprising:
   a first computing device comprising:
      a memory configured to store instructions; and
      a processor to execute the instructions to perform a method comprising:
         receiving data representing content of one or more web assets;
         determining an appropriate amount of font information for the one or more web assets to provide to a user device based upon the data representing the content of the one or more web assets; and
         storing the determined appropriate amount of font information.
In embodiment 40 according to embodiment 39, wherein the processor executes instructions to provide the stored font information to the user device for presentation of the one or more web assets.
In embodiment 41 according to any one of embodiments 39 to 40, wherein determining the appropriate amount of font information is based upon one or more sources of the one or more web assets.
In embodiment 42 according to any one of embodiments 39 to 41, wherein determining the appropriate amount of font information is based upon one or more capabilities of the user device.
In embodiment 43 according to any one of embodiments 39 to 42, wherein the font information includes a font subset.
In embodiment 44, one or more computer readable media storing instructions that are executable by a processing device, and upon such execution cause the processing device to perform operations comprising:
   receiving data representing content of one or more web assets;
   determining an appropriate amount of font information for the one or more web assets to provide to a user device based upon the data representing the content of the one or more web assets; and
   storing the determined appropriate amount of font information.
In embodiment 45 according to embodiments 44, further storing instructions that are executable by a processing device, and upon such execution cause the processing device to perform operations comprising:
   providing the stored font information to the user device for presentation of the one or more web assets.
In embodiment 46 according to any one of embodiments 44 to 45, wherein determining the appropriate amount of font information is based upon one or more sources of the one or more web assets.
In embodiment 47 according to any one of embodiments 44 to 46, wherein determining the appropriate amount of font information is based upon one or more capabilities of the user device.
In embodiment 48 according to any one of embodiments 44 to 47, wherein the font information includes a font subset.

Thus, particular embodiments of the invention have been described. Other embodiments are within the scope of the following claims. For example, the actions recited in the claims can be performed in a different order and still achieve desirable results.

## Claims

1. A computer-implemented method comprising:
receiving one or more environment characteristics of a communication connection between a user device and a font provider;
determining an appropriate amount of font information of a web asset to provide to the user device based upon the one or more environment characteristics; and
providing the appropriate amount of font information of the web asset to the user device for presenting the web asset.

2. The computer-implemented method of claim 1, wherein one of the one or more environment characteristics represents throughput of the communication connection or
wherein one of the one or more environment characteristics represents bandwidth of the communication connection or
wherein one of the one or more environment characteristics represents processing time.

3. The computer-implemented method of claim 1, wherein one of the one or more environment characteristics represents the amount of font information to be provided to the user device.

4. The computer-implemented method of claim 1, wherein determining the appropriate amount of font information of the web asset to provide to the user devices is based upon the content of the web asset.

5. The computer-implemented method of claim 1, wherein the font information includes one or more font subsets for the user device to present the content of the web asset.

6. The computer-implemented method of claim 1, wherein the font information is for presenting a first page of the web asset,
further comprising:
providing additional font information of the web asset to the user device as the first page of the web asset is being presented.

7. The computer-implemented method of claim 1, wherein the font information of the web asset is previously produced.

8. A system comprising:
a first computing device comprising:
a memory configured to store instructions; and
a processor to execute the instructions to perform a method comprising:
receiving one or more environment characteristics of a communication connection between a user device and a font provider;
determining an appropriate amount of font information of a web asset to provide to the user device based upon the one or more environment characteristics; and
providing the appropriate amount of font information of the web asset to the user device for presenting the web asset.

9. The system of claim 8, wherein one of the one or more environment characteristics represents throughput of the communication connection or
wherein one of the one or more environment characteristics represents bandwidth of the communication connection or
wherein one of the one or more environment characteristics represents processing time.

10. The system of claim 8, wherein one of the one or more environment characteristics represents the amount of font information to be provided to the user device.

11. The system of claim 8, wherein determining the appropriate amount of font information of the web asset to provide to the user devices is based upon the content of the web asset.

12. The system of claim 8, wherein one or more of the environment characteristics represents the capabilities of the user device.

13. The system of claim 8, wherein the font information includes one or more font subsets for the user device to present the content of the web asset.

14. The system of claim 8, wherein the font information is for presenting a first page of the web asset,
wherein the processor executes the instructions to provide additional font information of the web asset to the user device as the first page of the web asset is being presented.

15. One or more computer readable media storing instructions that are executable by a processing device, and upon such execution cause the processing device to perform operations according to anyone of claims 1 to 7.
